# EUROPEAN PATENT APPLICATION

(11) **EP 4 037 376 A1**
(43) Date of publication of application: **03.08.2022**
(21) Application number: 20867578.5
(22) Date of filing: 09.09.2020
(51) Int. Cl.: H04W 36/00, H04W 4/00, H04W 48/10

(54) **BASE STATION DEVICE, TERMINAL DEVICE, CONTROL METHOD, AND PROGRAM THAT USE NOTIFICATION INFORMATION TAKING INTO CONSIDERATION EXISTENCE OF MULTIPLE CARRIERS**

(30) Priority: 24.09.2019 JP 2019173339
(71) Applicant: KDDI Corporation, Tokyo 163-8003 (JP)
(72) Inventor: TAKEDA, Hiroki, Tokyo 163-8003 (JP)
(74) Representative: Pitchford, James Edward
(86) International application number: PCT/JP2020/034027
(87) International publication number: WO 2021/059973

(57) **Abstract**

Abase station device provides a neighbor cell list specifying one or more neighbor cells, the neighbor cell list including information that enables specifying a service provider for each of the one or more neighbor cells. A terminal device receives, from a base station device for which service is provided by a service provider with which the terminal device is affiliated, the neighbor cell list, and performs control to execute radio quality measurement and cell migration determination with respect to a cell provided by the service provider with which the terminal device is affiliated.

## Description

### TECHNICAL FIELD

The present invention relates to a base station device, a terminal device, a control method, and a program, and also relates to a technique of configuring information on neighbor cells.

### BACKGROUND ART

A base station device periodically transmits notification signals including information on a neighbor cell list related to cells neighboring the cell formed by the base station device (see NPL 1), and terminal devices execute radio quality measurement and cell migration determination on the basis of the notification signals. This allows the terminal devices to enter a standby state in any of the cells, and receive and send signals in a timely manner.

### CITATION LIST

### NON-PATENT LITERATURE

NPL1: 3GPP TS36.331 V15.6.0, June 2019

### SUMMARY OF INVENTION

### TECHNICAL PROBLEM

The sharing of one base station device among multiple service providers is under consideration. A base station device shared by multiple service providers treats cells provided by the service providers as neighbor cells. Thus, from the standpoint of a terminal device, these neighbor cells include cells of other service providers to which the terminal device is not subscribed. As a result, the terminal device may unnecessarily perform radio quality measurement and cell migration determination on such a cell.

### SOLUTION TO PROBLEM

The present invention provides a technique that enables a terminal device to execute radio quality measurement and cell migration determination with respect to an appropriate cell in an environment in which multiple service providers can share a base station device.

A base station device according to one aspect of the present invention includes notification means for providing a neighbor cell list specifying one or more neighbor cells, the neighbor cell list containing information that enables specifying the service provider for each of the one or more neighbor cells.

A terminal device according to one aspect of the invention includes reception means for receiving, from a base station device for which service is provided by a service provider with which the terminal device is affiliated, a neighbor cell list specifying one or more neighbor cells, the neighbor cell list including information that enables specifying a service provider for each of the one or more neighbor cells; and control means for controlling the terminal device to execute radio quality measurement and cell migration determination with respect to a cell provided by the service provider with which the terminal device is affiliated.

### ADVANTAGEOUS EFFECTS OF INVENTION

According to the present invention, a terminal device can execute radio quality measurement and cell migration determination with respect to an appropriate cell in an environment in which multiple service providers can share a base station device.

Other features and advantages of the present invention will be apparent from the following description taken in conjunction with the accompanying drawings. Note that the same reference numerals denote the same or like components throughout the accompanying drawings.

### BRIEF DESCRIPTION OF DRAWINGS

The accompanying drawings, which are incorporated in and constitute a part of the specification, illustrate embodiments of the invention and, together with the description, serve to explain principles of the invention.
FIG. 1 is a diagram illustrating a configuration example of a wireless communication system.
FIG. 2 is a diagram illustrating a hardware configuration example of a base station device and a terminal device.
FIG. 3 is a diagram illustrating a configuration example of a base station device.
FIG. 4 is a diagram illustrating a configuration example of a terminal device.
FIG. 5 is a diagram illustrating an example processing flow executed by the system.

### DESCRIPTION OF EMBODIMENTS

Hereinafter, embodiments will be described in detail with reference to the attached drawings. Note, the following embodiments are not intended to limit the scope of the claimed invention, and limitation is not made to an invention that requires a combination of all features described in the embodiments. Two or more of the multiple features described in the embodiments may be combined as appropriate. Furthermore, the same reference numerals are given to the same or similar configurations, and redundant description thereof is omitted.

### System Configuration

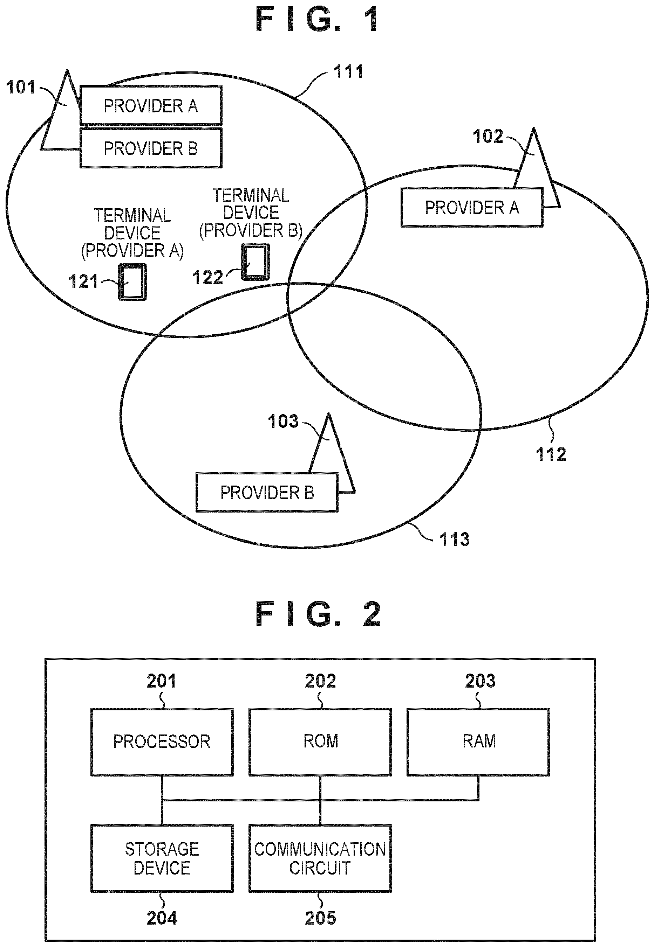

FIG. 1 illustrates a configuration example of a wireless communication system according to the present embodiment. Note that the example in FIG. 1 illustrates three base station devices and two terminal devices. Obviously, however, there may be more base station devices and terminal devices. When there is only one terminal device, the processing explained below can obviously be executed.

Abase station device 101 is shared by a service provider A and a service provider B. A base station device 102 is provided by the service provider A, and a base station device 103 is provided by the service provider B. The base station devices 101 to 103 are capable of communication with terminal devices residing respectively within the range of cells 111 to 113, which are the coverage areas in which the respective base station devices are capable of communication. The terminal devices 121 and 122 can perform wireless communication by connecting to the base station device that provides the cell that contains the positions of the terminal devices 121 and 122. Note that the terminal devices 121 and 122 enter a standby state and can operate with low power consumption if there is no data to be sent or received and if a predetermined condition, such as deviation from a predetermined range (for example, a tracking area), is not satisfied. In the present embodiment, it is presumed that the terminal device 121 receives the communication service provided by the service provider A, and the terminal device 122 receives the communication service provided by the service provider B. Hereinafter, this may be referred to as the terminal device 121 being affiliated with the service provider A and the terminal device 122 being affiliated with the service provider B. Note that in the state illustrated in FIG. 1, it is presumed that the terminal devices 121 and 122 reside in the cell formed by the base station device 101 shared by the service providers A and B, and are in a standby state.

The terminal devices 121 and 122 perform processing for measuring the radio quality of signals sent from the surrounding base station devices and selecting the cell to which connection is to be established. When the terminal devices 121 and 122 move, and, as a result, the radio quality of another cell becomes higher by a predetermined value or more than the radio quality of the cell in which the terminal devices 121 and 122 reside, the terminal devices 121 and 122 determines whether to migrate to another cell (executes cell reselection). At this time, the information on the target cells to be subjected to radio quality measurement and the target cells to be subjected to cell migration determination by the terminal devices 121 and 122 is provided by the base station device providing the cell in which the terminal devices reside. The base station devices 101 to 103 send notification signals including information on neighbor cells of the cells formed by the base station devices (for example, neighbor cell lists) as information on the target cells to be subjected to radio quality measurement and cell migration determination by the terminal devices 121 and 122. Here, the term "neighboring" refers not only to a case in which two cells are in contact with each other, but also a case in which one of two cells includes the other cell, a case in which cells establish a neighboring relationship as a result of one or both of the cells being expanded, for example, through relay transmission, and a case in which two base station devices establish a relationship of exchanging cell information with each other regardless of whether the base station devices are physically adjacent to each other.

The terminal devices 121 and 122 receive a notification signal including a neighbor cell list provided by a base station device, and execute radio quality measurement and cell migration determination for a neighbor cell of the cell in which the terminal devices reside. For example, when each terminal device measures the radio quality of a neighbor cell and determines that the radio quality is sufficiently high, e.g., exceeds a predetermined value, the terminal device checks the information on the service provider included in the notification signal of the neighbor cell. If the base station is of the service provider with which the terminal device is affiliated, the terminal device may migrate to the corresponding cell. Note that each terminal device may determine to migrate to a cell on the condition that the difference between the radio quality of the cell to which the terminal device can migrate and the radio quality of the cell in which the terminal device is currently residing is equal to or larger than a predetermined value. At this time, even if each terminal device measures the radio quality of a cell provided only by a service provider other than the service provider with which the terminal device is affiliated, the terminal device cannot enter a standby state in that cell except in exceptional cases such as when roaming is performed. Thus, even if the terminal device executes radio quality measurement or cell migration determination for such a cell, the terminal device cannot establish communication without executing predetermined processing for roaming or the like.

Since the base station device 102 is used only by the service provider A, its neighbor cell list generally contains no information other than information on cells provided by the service provider A. Similarly, since the base station device 103 is used only by the service provider B, its neighbor cell list generally contains only information provided by the service provider B. Thus, a terminal device affiliated with the service provider A residing within the coverage area of the cell provided by the base station device 102 does not recognize a cell of a service provider other than the service provider A as a neighbor cell, and does not perform radio quality measurement and cell migration determination of such a cell. In contrast, since the base station device 101 is shared between the service providers A and B, both cells of the service providers A and B are recognized as neighbor cells, and information on these neighbor cells can be provided. For example, the base station device 101 sends a neighbor cell list containing information on the cell 112 provided by the base station device 102 as a neighbor cell of the service provider A and the cell 113 provided by the base station device 103 as a neighbor cell of the service provider B. However, in such a case, the terminal device 121 also treats the cell 113 of the service provider B, which is not the service provider A with which the terminal device is affiliated, as a neighbor cell. For this reason, the terminal device 121 performs radio quality measurement and cell migration determination on the cell 113 and, as a result, cannot migrate to the cell 113, hence executing unnecessary radio quality measurement and cell migration determination.

In the present embodiment, in order to prevent such unnecessary radio quality measurement and cell migration determination, the base station device provides a neighbor cell list containing one or more neighbor cells and information that enables specifying the service provider for each of one or more neighbor cells in the list. Only base station devices that are shared by multiple service providers may send such neighbor cell lists containing the information that enables specifying service providers. That is, a base station device used by a single service provider only needs to provide information on neighbor cells pertaining to that service provider and needs not to provide the information that enables specifying the service provider. For this reason, only the neighbor cell lists provided by multiple service providers may contain information that enables specifying the service providers of the respective cells. Note that even if a base station device is used by a single service provider, the base station device may provide a neighbor cell list containing information that enables specifying the service provider of each cell. Abase station device may acquire cell information containing information on the service providers of neighbor cells from another base station device providing a neighbor cell, and provide the information as it is or after processing it.

When a terminal device receives such a neighbor cell list, the terminal device extracts, form the neighbor cell list, a cell provided by the service provider with which the terminal device is affiliated, and performs control so as to execute radio quality measurement and cell migration determination on the one or more cells extracted. In this way, the terminal device does not have to execute unnecessary radio quality measurement and cell migration determination for cells provided by service providers with which the terminal device is not affiliated. Note that in the case where the terminal device cannot achieve sufficient radio quality in any of the cells provided by the service provider with which the terminal device is affiliated, the terminal device may execute predetermined processing, such as roaming, so as to migrate to any cell provided by other service providers.

Such a notification signal can be sent by a base station device of a third-generation wireless communication system according to a CDMA2000 or universal mobile telecommunication system (UMTS) standard, a long-term evolution communication system, or a fifth-generation or later wireless communication system according to New Radio (NR). That is, the base station device can provide a neighbor cell list containing information that enables specifying service providers in any wireless communication system, such as a current wireless communication system or a future wireless communication system, in which cell a terminal device performs cell migration determination.

Note that information that enables specifying service providers may be identification information for identifying service providers. The identification information is, for example, public land mobile network (PLMN) identity. Alternatively, the identification information may be a combination of public land mobile network (PLMN) identity and a network identifier (NID). Alternatively, the identification information may be a closed access group (CAG) identifier or a closed subscriber group (CSG) identifier used for identifying a local base station or a femtocell base station when a local network is established at an office of a company or the like. The information that enables specifying service providers may be frequency information associated with service providers. That is, since a frequency band is allocated to each service provider, the service provider may be specified by frequency information indicating the corresponding frequency band. The frequency information may be, for example, an absolute radio frequency channel number (ARFCN) or band information (a band indicator).

Note that a base station device may provide conditions for a terminal device to determine whether to migrate to a neighbor cell together with the information that enables specifying service providers. For example, a terminal device may acquire further notification information when the measured value of radio quality is equal to or greater than a first threshold value, and may execute cell migration determination when the value obtained by subtracting the measured value of radio quality of the cell in which the terminal device is currently residing from the measured value of radio quality of a neighbor cell exceeds a second threshold value. In such a case, at least one of the first threshold value and the second threshold value may be provided. For example, threshold information may be provided such that the first threshold value or the second threshold value for the service provider with which the terminal device is affiliated is smaller than the first threshold value or the second threshold value for a service provider with which the terminal device is not affiliated. In this way, it is possible to perform control such that the terminal device does not exclude the execution of radio quality measurement or cell migration determination of cells of service providers other than the service provider with which the terminal device is affiliated, and prioritizes migration to the service provider with which the terminal device is affiliated. The start condition for the measurement of a neighbor cell and the priority of the neighbor cell (cell reselection priority) to be reported to the terminal device may be provided in the neighbor cell list together with information that enables specifying service providers.

A base station device may provide a blacklist specifying cells to which the terminal device should not migrate. For example, a cell in which a terminal device should be prevented from entering the standby state, such as a cell provided by a base station device under maintenance, can be provided in a blacklist. Note that the blacklist may also include information that enables specifying service providers. Accordingly, the terminal device can readily specify, in the blacklist, cells provided by the service provider with which the terminal device is affiliated. Here, the information that enables specifying service providers may be identification information or frequency information of service providers. Moreover, a base station device may include a neighbor cell in the blacklist when the base station device acquires cell information containing information on a service provider of a base station device of a neighbor cell, and the service provider does not support the base station device providing the blacklist or the service provider is not recognized by the base station device providing the blacklist. In one example, when a base station device acquires cell information provided by a local base station with a local network established at a company office or the like, the base station device can include this cell in the blacklist. This prevents a person unrelated to the company from attempting to connect to the local base station. Throughout the present embodiment, anyone who operates a base station is referred to as a service provider, even if they are not a service provider, such as an operator of a local base station, referred to as a network operator.

### Configuration of Device

FIG. 2 illustrates a hardware configuration example of a base station device and a terminal device according to the present embodiment. In one example, these devices include a processor 201, a ROM 202, a RAM 203, a storage device 204, and a communication circuit 205. The processor 201 is a computer including one or more processing circuits, such as a general-purpose central processing unit (CPU) and an application-specific integrated circuit (ASIC), and reads and executes programs stored in the ROM 202 and the storage device 204 to execute comprehensive processing of the base station device/terminal device and the processing described above. The ROM 202 is a read-only memory for storing information such as programs and various parameters related to the processing executed by the base station device/terminal device. The RAM 203 is a random-access memory that functions as a workspace for the processor 201 to execute programs and temporarily stores information. The storage device 204 is composed of, for example, a detachable external storage device. The communication circuit 205 is composed of, for example, a circuit for wireless communication. The base station device/terminal device includes, for example, a baseband circuit and RF circuit for cellular communication and an antenna to serve as the communication circuit 205 for communication with other devices. Note that, in FIG. 2, although one communication circuit 205 is illustrated, the base station device/terminal device may alternatively include multiple communication circuits. For example, the base station device may include a wired or wireless communication circuit for communication with other base station devices in addition to a communication circuit for communication with terminal devices. The terminal device may include a communication circuit, such as a wireless LAN, in addition to a communication circuit for communication with the base station device.

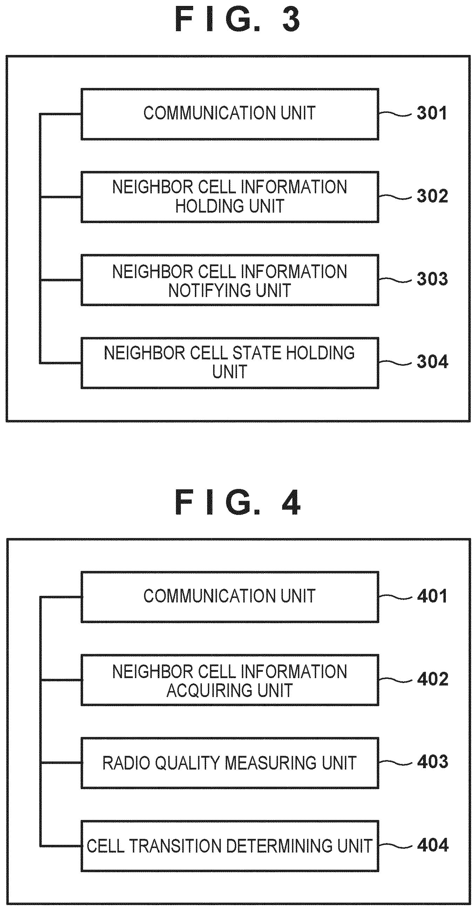

FIG. 3 is a diagram illustrating a functional configuration example of a base station device. The base station device includes, for example, a communication unit 301, a neighbor cell information holding unit 302, a neighbor cell information notifying unit 303, and a neighbor cell state holding unit 304. Note that FIG. 3 exemplifies the functions related to the technique according to the present embodiment, and the base station device obviously has the functions as a general base station device. The communication unit 301 is, for example, a functional unit for executing wireless communication with a terminal device. The communication unit 301 can perform wireless communication by, for example, a wireless communication system that allows a terminal device to migrate to a neighbor cell, such as a third-generation wireless communication system, a long-term evolution communication system, a fifth-generation wireless communication system, or a cellular communication system of each generation. The neighbor cell information holding unit 302 holds, for example, information on cells neighboring the cell provided by the base station device. This information includes, for example, identification information of neighbor cells (physical cell identifier, etc.) and information that enables specifying service providers for the neighbor cells. The information that enables specifying service providers may be identification information of service providers or frequency information associated with service providers, as described above. The neighbor cell information notifying unit 303 provides a neighbor cell list pertaining to one or more neighbor cells, as described above, and information that enables specifying the service provider of each of the one or more neighbor cells based on the information held by the neighbor cell information holding unit 302 via the communication unit 301. The neighbor cell state holding unit 304 holds information indicating the state of the neighbor cells, such as information indicating whether or not the neighbor cell is available. For example, when the neighbor cell state holding unit 304 holds information indicating that a base station device providing a neighbor cell is under maintenance, the neighbor cell information notifying unit 303 can generate and provide a blacklist for preventing terminal devices from migrating to this neighbor cell.

FIG. 4 is a diagram illustrating a functional configuration example of a terminal device. The terminal device includes, for example, a communication unit 401, a neighbor cell information acquiring unit 402, a radio quality measuring unit 403, and a cell transition determining unit 404. Note that FIG. 4 exemplifies the functions related to the technique according to the present embodiment, and the terminal device obviously has the functions as a general terminal device. The communication unit 401 is, for example, a functional unit for executing wireless communication with a base station device. The communication unit 401 can perform wireless communication by, for example, a wireless communication system that allows a terminal device to migrate to a neighbor cell, such as a third-generation wireless communication system, a long-term evolution communication system, a fifth-generation wireless communication system, or a cellular communication system of each generation. The neighbor cell information acquiring unit 402 acquires information on neighbor cells, such as a neighbor cell list and a blacklist, from the base station devices. These lists may include service provider identification information that enables specifying service providers and frequency information associated with service providers, as described above. The radio quality measuring unit 403 measures the radio quality of the surrounding cells. The cell transition determining unit 404 executes migration determination of a cell in a standby state on the basis of the measured value of the radio quality obtained by the radio quality measuring unit 403. For example, the radio quality measuring unit 403 specifies a cell provided by the service provider with which the terminal device is affiliated from the neighbor cell list and measures the radio quality of this cell, and the cell transition determining unit 404 executes cell migration determination on the basis of the measured value obtained through this measurement. As a result, the terminal device does not unnecessarily execute radio quality measurement and cell migration determination on cells provided by service providers other than the service provider with which the terminal device is affiliated. Note that the terminal device may execute radio quality measurement and cell migration determination on cells provided by other service providers when a cell of the service provider with which the terminal device is affiliated does not exist in the surrounding.

### Processing Flow

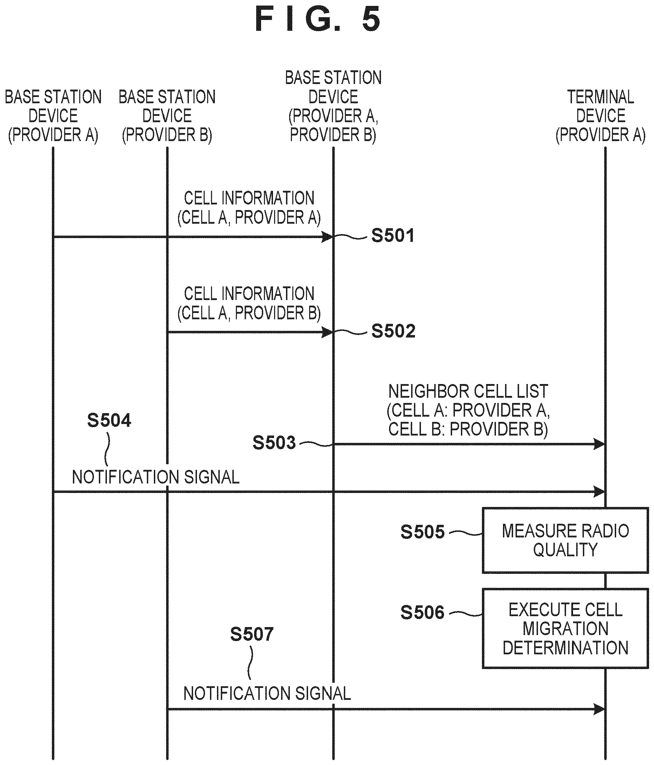

FIG. 5 illustrates an example of a processing flow executed in the wireless communication system according to the present embodiment. Note that a typical operation in the system will be described here, but it is obvious that the above-described modification examples and the like can be applied, and the description of such modification examples will be omitted. Note that in the example of FIG. 5, it is presumed that the terminal device is affiliated with the service provider A and is in the standby state in a cell provided by a base station device shared by the service providers A and B.

The base station device acquires, from other base station devices that are the sources of neighbor cells of the cell provided by the base station device, cell identifiers (for example, physical cell identifiers) and information that enables specifying the service providers of the neighbor cells (step S501, step S502). For example, this information is sent and received between the base station devices in response to the establishment of a communication link (or a predetermined interface such as an X2 interface) between the base station devices. At this time, a base station device shared by multiple service providers may be prevented from acquiring information on service providers by individually establishing a communication link or interface with each service provider on the basis of the information of each service provider. That is, when a service provider implicitly providing a cell can be specified by the communication link, interface, or the like used, the base station device does not have to explicitly acquire the information of the service provider from other base station devices.

The base station device provides an acquired neighbor cell list containing the cell information of the neighbor cells to the terminal devices residing in the cell provided by the base station device (step S503). Note that the neighbor cell list contains not only identification information of each of the one or more neighbor cells but also information of service providers for the neighbor cells, such as identification information of the service providers and frequency information associated with the service providers. Note that information such as a blacklist of cells to which the terminal device should not migrate may be provided simultaneously with the neighbor cell list or at another timing.

The terminal device executes radio quality measurement and cell migration determination on the basis of the provided information. That is, when the terminal device receives radio signals sent from the base station device providing the cell of the service provider A with which the terminal device is affiliated (step S504), the terminal device executes radio quality measurement (step S505) and cell migration determination (step S506). In contrast, the terminal device does not execute radio quality measurement and cell migration determination even when the terminal device receives radio signals from the base station device providing the cell of the service provider B (step S507). Note that the terminal device may execute radio quality measurement of the cell of the service provider B and cell migration determination, for example, when none of the cells of the service provider A have sufficient radio quality.

As described above, the base station device can send the information that enables specifying service providers in association with neighbor cells to prevent the terminal device from unnecessarily subjecting cells with which the terminal device is not affiliated, to radio quality measurement and cell migration determination.

The invention is not limited to the foregoing embodiments, and various variations/changes are possible within the spirit of the invention.

This application claims priority on the basis of Japanese Patent Application No. 2019-173339 filed on September 24, 2019, the entire content of which is hereby incorporated by reference.

## Claims

1. A base station device comprising:
notification means for providing a neighbor cell list specifying one or more neighbor cells, the neighbor cell list including information that enables specifying a service provider for each of the one or more neighbor cells.

2. The base station device according to claim 1, wherein the notification means provides the notification using at least one of a third-generation wireless communication system, a long-term evolution communication system, and a fifth-generation wireless communication system.

3. The base station device according to claim 1 or 2, wherein the information that enables specifying a service provider is identification information identifying the service provider.

4. The base station device according to claim 3, wherein the identification information is a public land mobile network (PLMN) identity.

5. The base station device according to claim 3, wherein the identification information is a combination of a public land mobile network (PLMN) identity and a network identifier (NID).

6. The base station device according to claim 3, wherein the identification information is a closed access group (CAG) identifier.

7. The base station device according to claim 3, wherein the identification information is a closed subscriber group (CSG) identifier.

8. The base station device according to claim 1 or 2, wherein the information that enables specifying a service provider is frequency information associated with the service provider.

9. The base station device according to any one of claims 1 to 8, wherein the notification means provides a condition for determining migration to the one or more neighbor cells together with the information that enables specifying a service provider.

10. A terminal device comprising:
reception means for receiving, from a base station device for which service is provided by a service provider with which the terminal device is affiliated, a neighbor cell list specifying one or more neighbor cells, the neighbor cell list including information that enables specifying a service provider for each of the one or more neighbor cells; and
control means for performing control to execute radio quality measurement and cell migration determination with respect to a cell provided by the service provider with which the terminal device is affiliated.

11. The terminal device according to claim 10, wherein the reception means receives the neighbor cell list using at least one of a third-generation wireless communication system, a long-term evolution communication system, and a fifth-generation wireless communication system.

12. The terminal device according to claim 10 or 11, wherein the information that enables specifying a service provider is identification information identifying the service provider.

13. The terminal device according to claim 12, wherein the identification information is a public land mobile network (PLMN) identity.

14. The terminal device according to claim 12, wherein the identification information is a combination of a public land mobile network (PLMN) identity and a network identifier (NID).

15. The terminal device according to claim 12, wherein the identification information is a closed access group (CAG) identifier.

16. The terminal device according to claim 12, wherein the identification information is a closed subscriber group (CSG) identifier.

17. The terminal device according to claim 10 or 11, wherein the information that enables specifying a service provider is frequency information associated with the service provider.

18. The terminal device according to any one of claims 10 to 17, wherein
the reception means receives, from the base station device, a condition for determining migration to a cell among the one or more neighbor cells together with the information that enables specifying a service provider, and
the controlling means executes the control based on the condition.

19. A control method executed by a base station device, the control method comprising:
a notification step of providing a neighbor cell list specifying one or more neighbor cells, the neighbor cell list including information that enables specifying a service provider for each of the one or more neighbor cells.

20. A control method executed by a terminal device, the control method comprising:
a reception step of receiving, from a base station device for which service is provided by a service provider with which the terminal device is affiliated, a neighbor cell list specifying one or more neighbor cells, the neighbor cell list including information that enables specifying a service provider for each of the one or more neighbor cells; and
a control step of performing control to execute radio quality measurement and cell migration determination with respect to a cell provided by the service provider with which the terminal device is affiliated.

21. A program for causing a computer provided in a base station device to:
provide a neighbor cell list specifying one or more neighbor cells, the neighbor cell list including information that enables specifying a service provider for each of the one or more neighbor cells.

22. A program for causing a computer provided in a terminal device to:
receive, from a base station device for which service is provided by a service provider with which the terminal device is affiliated, a neighbor cell list specifying one or more neighbor cells, the neighbor cell list including information that enables specifying a service provider for each of the one or more neighbor cells; and
perform control to execute radio quality measurement and cell migration determination with respect to a cell provided by the service provider with which the terminal device is affiliated.
